# EUROPEAN PATENT SPECIFICATION

(11) **EP 1 454 453 B1**
(45) Date of publication and mention of the grant of the patent: **28.02.2007**
(21) Application number: 02791017.3
(22) Date of filing: 03.12.2002
(51) Int. Cl.: H04L 12/18, H04L 29/06

(54) **METHOD AND APPARATUS FOR TUNNELING SERVICE OF EXPLICIT MULTICAST IN MOBILE IP NETWORK**
VERFAHREN UND VORRICHTUNG ZUM TUNNELN EINES DIENSTES FÜR EXPLIZITES MULTICAST IN EINEM MOBIL-IP-NETZWERK
PROCEDE ET APPAREIL DE SERVICE DE TRANSMISSION TUNNEL DE MULTIDIFFUSION EXPLICITE DANS UN RESEAU IP MOBILE

(30) Priority: 12.12.2001 KR 2001078505
(43) Date of publication of application: 08.09.2004
(73) Proprietor: KTFreetel Co., Ltd, 135-280 Seoul (KR)
(72) Inventor: LEE, Ji-Woong, Seoul 137-070 (KR); SHIN, Myung-Ki, Daejeon 305-390 (KR)
(74) Representative: Tothill, John Paul
(86) International application number: PCT/KR2002/002270
(87) International publication number: WO 2003/051002

(56) References cited:
- KR-A- 2001 025 940
- KR-A- 2002 023 100
- US-B1- 6 189 039
- XYLOMENOS G ET AL: "IP multicasting for wireless mobile hosts" MILITARY COMMUNICATIONS CONFERENCE, 1996. MILCOM '96, CONFERENCE PROCEEDINGS, IEEE MCLEAN, VA, USA 21-24 OCT. 1996, NEW YORK, NY, USA,IEEE, US, vol. 3, 21 October 1996 (1996-10-21), pages 933-937, XP010204037 ISBN: 0-7803-3682-8
- JOHNSON D B ED - INSTITUTE OF ELECTRICAL AND ELECTRONICS ENGINEERS: "SCALABLE AND ROBUST INTERNETWORK ROUTING FOR MOBILE HOSTS" PROCEEDINGS OF THE INTERNATIONAL CONFERENCE ON DISTRIBUTED COMPUTING SYSTEMS. POZNAN, POLAND, JUNE 21 - 24, 1994, LOS ALAMITOS, IEEE COMP. SOC. PRESS, US, vol. CONF. 14, 21 June 1994 (1994-06-21), pages 2-11, XP000489063 ISBN: 0-8186-5842-8
- JIA W ET AL: "Efficient algorithm for mobile multicast using anycast group" IEE PROCEEDINGS : COMMUNICATIONS, INSTITUTION OF ELECTRICAL ENGINEERS, GB, vol. 148, no. 1, 13 February 2001 (2001-02-13), pages 14-18, XP006016117 ISSN: 1350-2425
- CHIKARMANE V ET AL: "Mobile IP-based multicast as a service for mobile hosts" SERVICES IN DISTRIBUTED AND NETWORKED ENVIRONMENTS, 1995., SECOND INTERNATIONAL WORKSHOP ON WHISTLER, BC, CANADA 5-6 JUNE 1995, LOS ALAMITOS, CA, USA,IEEE COMPUT. SOC, 5 June 1995 (1995-06-05), pages 11-18, XP010148070 ISBN: 0-8186-7092-4

## Description

### Technical Field

The present invention relates to a method and an apparatus for tunneling service of explicit multicast in a mobile IP network, and more specifically to a method and an apparatus for tunneling service of explicit multicast in a mobile IP network for transmitting a multicast packet to plural mobile nodes efficiently.

### Background Art

Generally, a mobile IP is used for receiving a data packet having an address within a home network continuously while the internet node which connects with a network (home network) on regular basis connects with another network (foreign network) temporarily. In turn, the internet node connecting with the foreign network is called a mobile node.

Plural mobile nodes are provided with internet multicast service on the mobile IP network in two ways. According to the first method, the mobile node is provided with the multicast service by joining with a multicast group through the multicast router on a foreign network in which the mobile node visits. According to the second method the mobile node is provided with the multicast service by joining with a multicast group through a home agent.

Upon comparison, the first method has an advantage that the mobile node can receive the multicast packet via relatively optimized path when the mobile node receives the multicast packet from outside, but this requires the foreign network that the mobile node visits to use a router to provide the multicast service. However, the first method is not available if the mobile node is set up unless the multicast service should be provided for security reasons when the mobile node connects with a foreign network.

As described above, the multicast service is typically provided in the mobile IP network by a home agent to prevent the problems of multicast service occurring through the path on the foreign network.

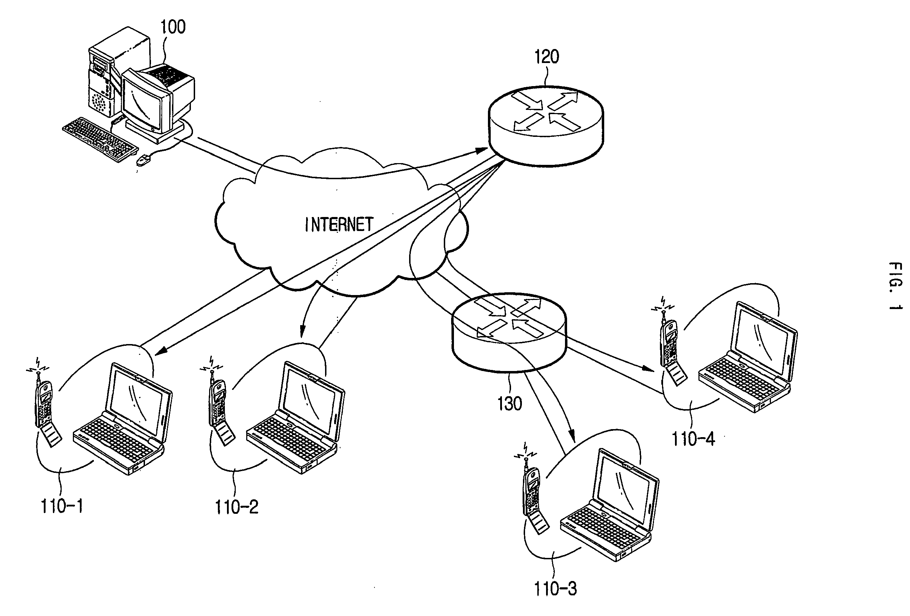

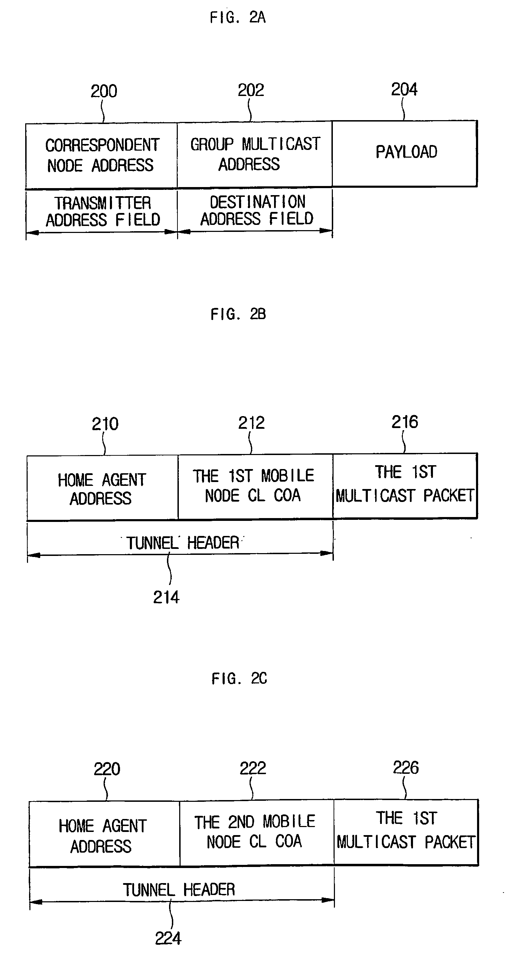

The tunneling service of the mobile IP network according to the prior art will be described referring to accompanying drawings. Fig. 1 represents the schematic configuration of an apparatus for tunneling service according to the prior art, and Fig. 2A to Fig. 2G represent the structure of a multicast packet used for the tunneling service according to the prior art.

Referring Fig.1, the 1^{st} - the 4^{th} mobile nodes 110-1, 110-2, 110-3, 110-4 that receive a multicast packet from a correspondent node 100 are connected with a foreign network after departing from a home network. Accordingly the 1^{st} - the 4^{th} mobile nodes 110-1, 110-2, 110-3, 110-4 are allocated a COA (care-of address). Furthermore, the 1^{st} and the 2^{nd} mobile nodes 110-1, 110-2 are allocated a CL COA (Co-Located Care-of Address) by a DHCP server (Dynamic Host Configuration Protocol Server--not shown) on the foreign network. Also, a foreign agent care-of address (foreign agent COA) is allocated to the 3rd and the 4th mobile nodes 110-3, 110-4 by using path information of a foreign agent 130 on the foreign network.

The correspondent node 100 generates the 1^{st} multicast data packet as shown in Fig. 2A and transmits it to the home agent 120 to provide predefined service or information for the 1^{st} - the 4^{th} mobile nodes 110-1, 110-2, 110-3, 110-4. As shown in Fig. 2A, the 1^{st} multicast packet includes a transmitter address field 200 storing the address of the correspondent node 100, destination address field 202, and payload 204 for storing data. Furthermore, the destination address field 202 stores the predefined address of a group multicast for multicasting by the group to which the 1^{st} - the 4^{th} mobile nodes 110-1, 110-2, 110-3, 110-4 belong.

The address of the group multicast is designated from '224.0.0.0' - '239.255.255.255' and is given to the multicast group. The home agent 120 recognizes the transmission path of the 1^{st} multicast packet by identifying a join signal inputted from the 1^{st} - the 4^{th} mobile nodes 110-1, 110-2, 110-3, 110-4 to receive the multicast packet from the correspondent node 100. Accordingly, the recognized transmission path of the 1^{st} multicast packet is from the 1st mobile node 110-1, via the 2nd mobile node 110-2 to the foreign agent 130.

The home agent 120 generates a tunnel header, of which a transmitter address is the home agent address and a destination address is the CL COA of the 1st mobile node 110-1, encapsulates the 1^{st} multicast packet, and generates the 2^{nd} multicast packet to transmit it to the 1^{st} mobile node 110-1.

As shown in Fig. 2B, the 2^{nd} multicast packet includes the tunnel header 214 including a home agent address field 210, the 1^{st} mobile node CL COA 212, and the 1^{st} multicast packet field 216.

Also, the home agent 120 generates a tunnel header of which the transmitter address is the home agent address and the destination address is CL COA of the 2^{nd} mobile node 110-2, encapsulates the 1^{st} multicast packet, and generates the 3^{rd} multicast packet to transmit it to the 2^{nd} mobile node 110-2.

As shown in Fig. 2C, the 3^{rd} multicast packet includes the tunnel header 224 including a home agent address field 220, the 2^{nd} mobile node CL COA 222, and the 1^{st} multicast packet field 226.

The home agent 120 transmits the generated 2^{nd} and the 3^{rd} multicast packets to the 1^{st} and the 2^{nd} mobile nodes 110-1, 110-2 in accordance with the 1^{st} and the 2^{nd} mobile nodes CL COA by unicast tunneling.

At this time, the 1^{st} and the 2^{nd} mobile nodes 110-1, 110-2 remove the tunnel header from the 2^{nd} and the 3^{rd} multicast packets transmitted from home agent 120 and checks the 1^{st} multicast packet transmitted from the correspondent node.

Also, the home agent 120 generates the 1^{st} tunnel header of which the transmitter address is the home agent address and the destination address is the home network address of the 2^{nd} mobile node 110-2, and encapsulates the 1^{st} multicast packet. Further, the home agent 120 generates the 2^{nd} tunnel header of which the transmitter address is the home agent address and the destination address is CL COA of the 3^{rd} mobile node, and encapsulates the encapsulated 1^{st} multicast packet again by appending the 2^{nd} tunnel header to the 1^{st} multicast packet to generate the 4^{th} multicast packet.

As shown in Fig. 2D, the 4^{th} multicast packet includes the 2^{nd} tunnel header 232 including home agent address field 230 and the home network address field of 3^{rd} mobile node 231, the 1^{st} tunnel header 235 including home agent address filed 233 and the CL COA field of the 3^{rd} mobile node, and the 1^{st} multicast packet field 236.

Also, the home agent 120 generates the 1^{st} tunnel header of which the transmitter address is the home agent address and the destination address is the home network address of the 4^{th} mobile node and encapsulates the 1^{st} multicast packet.

And, the home agent 120 generates the 2^{nd} tunnel header of which the transmitter address is the home agent address and the destination address is CL COA of the 4^{th} mobile node and encapsulates the encapsulated 1^{st} multicast packet again by appending the 2^{nd} tunnel header to the 1^{st} multicast packet to generate the 5^{th} multicast packet.

As shown in Fig. 2E, the 5^{th} multicast packet includes the 2^{nd} tunnel header 242 including home agent address field 240 and the home network address field of 4^{th} mobile node 241, the 1^{st} tunnel header 245 including home agent address filed 243 and the CL COA field of the 3^{rd} mobile node 244, and the 1^{st} multicast packet field 246.

The home agent 120 transmits the generated the 4^{th} and the 5^{th} multicast packets to foreign agent 130 in accordance with foreign agent COA using unicast tunneling. The foreign agent 130 transmits the 6^{th} and the 7^{th} multicast packets to the 3^{rd} and the 4^{th} mobile nodes 110-3, 110-4 that removes the 2^{nd} tunnel header 232, 242 from the 4^{th} and the 5^{th} multicast packets received by tunneling.

As shown in Fig. 2F, the 6^{th} multicast packet includes the 1^{st} tunnel header 254 including home agent address field 250 and the home network address field of 3^{rd} mobile node 252 and the 1^{st} multicast packet field 256.

As shown in Fig. 2G, the 7^{th} multicast packet includes the 1^{st} tunnel header 264 including home agent address field 260 and the home network address field of 4^{th} mobile node 262 and the 1^{st} multicast packet field 266.

The 3^{rd} and the 4^{th} mobile nodes 110-3, 110-4 remove the 1^{st} tunnel headers 254, 264 from the 6^{th} and the 7^{th} multicast packets transmitted from the foreign agent 130 to identify the 1^{st} multicast packet transmitted from the correspondent node 100. The foreign agent 130 doesn't have information about the COA of the 3^{rd} and the 4^{th} mobile nodes 110-3,110-4.

Therefore, the home agent 120 executes nested tunneling (to perform tunneling in accordance with each header by appending the 1^{st} and the 2^{nd} tunnel headers to the 1^{st} multicast packet to encapsulate the 1^{st} multicast packet) to transmit the 1^{st} multicast packet transmitted from the correspondent node 100 to the 3^{rd} and the 4^{th} mobile nodes 110-3, 110-4.

XYLOMENOS G ET AL: "IP multicasting for wireless mobile hosts" MILITARY COMMUNICATIONS CONFERENCE, 1996. MILCOM '96, CONFERENCE PROCEEDINGS, IEEE MCLEAN, VA, USA 21-24 OCT. 1996, NEW YORK, NY, USA, IEEE, US, vol. 3, 21 October 1996 (1996-10-21), pages 933-937, XP010204037 ISBN: 0-7803-3682-8 describes IP multicasting for wireless mobile hosts and the independent claims are characterised over this document.

JOHNSON D B ED - INSTITUTE OF ELECTRICAL AND ELECTRONICS ENGINEERS: "SCALABLE AND ROBUST INTERNETWORK ROUTING FOR MOBILE HOSTS" PROCEEDINGS OF THE INTERNATIONAL CONFERENCE ON DISTRIBUTED COMPUTING SYSTEMS. POZNAN, POLAND, JUNE 21-24, 1994, LOS ALAMITOS, IEEE COMPRISING. SOC. PRESS, US, vol. CONF. 14, 21 June 1994 (1994-06-21), pages 2-11, XP000489063 ISBN: 0-8186-5842-8, describes scalable and robust internetwork routing for mobile hosts.

As described above, the apparatus for multicast tunneling according to the prior art performs unicast tunneling by duplicating the multicast packets per the number of mobile nodes, encapsulating the multicast packet by COA of the mobile node, and transmitting the multicast packet to the mobile node. That is, the home agent 120 duplicates the n multicast packets to transmit the multicast packets to the n mobile nodes and performs the unicast tunneling so that the n duplicated packet is transmitted to each mobile node.

At this time, if the path is close to the home agent 120 the path is jammed about n times as the jam which happens when the multicast packet is transmitted. This is called a multicast landslide. The greater the mobile nodes are provided with multicast service within the same foreign network by the same home agent 120, the greater the extent that the multicast landslide occurs.

Therefore, the multicast loses its original effect that it can minimize transmission path requisition bandwidth during transmission of the same message since the same packets (the same payload) are transmitted through the same path, that is, the home agent 120 at the same time.

Also, to solve this problem, trials occurred to define a decentralized structure, a data signal for the home agent, and the foreign agent to exchange information about mobile nodes. However, difficulties resulted while introducing it since there are many independent network operators who have different operation policies.

### Disclosure of the Invention

Therefore, the present invention was devised to resolve the problems associated with the prior art. One object of the present invention is to provide a method and an apparatus for explicit multicast tunneling service on a mobile IP network to execute multicast tunneling by an explicit multicast packet having explicit multicast tunnel header including the care-of address list of plural mobile IPs.

A second object of the present invention is to provide a method and an apparatus for explicit multicast tunneling service on a mobile IP network to execute multicast tunneling by an explicit multicast packet having the explicit 1^{st} and the 2^{nd} multicast tunnel headers including the list of home network addresses and care-of addresses of plural mobile IPs.

According to a first aspect of the present invention there is provided a method for a multicast tunneling service as claimed in claim 1.

According to a second aspect of the present invention there is provided a method for a multicast tunneling service as claimed in claim 3.

According to a third aspect of the present invention there is provided an apparatus for a multicast tunneling service as claimed in claim 6.

According to a fourth aspect of the present invention there is provided an apparatus for a multicast tunneling service as claimed in claim 7.

According to a fifth aspect of the present invention there is provided an apparatus for a multicast tunneling service as claimed in claim 8.

According to a sixth aspect of the present invention there is provided an apparatus for a multicast tunneling service as claimed in claim 9.

In one embodiment a method comprises the step of mobile nodes using CL COA comprising the steps of receiving the multicast packet from the correspondent node, recognizing the mobile node located on the tunneling path of the received multicast packet of the plural mobile nodes, generating the explicit multicast tunnel header of which the destination address is the CL COA of the mobile node located on the tunneling path, encapsulating the received multicast packet by the generated explicit multicast tunnel header, and tunneling the encapsulated multicast packet to the mobile node.

In another embodiment a method for multicast tunneling service is provided to transmit a multicast packet transmitted from a correspondent node to plural mobile nodes on a mobile IP network. The method comprises the step of receiving the multicast packet from the correspondent node, recognizing the mobile node located on the tunneling path of the received multicast packet of the plural mobile nodes, generating the 1^{st} explicit multicast tunnel header of which the destination address is the home network address of the mobile node located on the tunneling path, encapsulating the received multicast packet by the 1^{st} explicit multicast tunnel header, generating the 2^{nd} explicit multicast tunnel header of which the destination address is the foreign agent COA of the mobile node located on the tunneling path, encapsulating the received multicast packet by the 2^{nd} explicit multicast tunnel header, and transmitting the re-encapsulated multicast packet to the tunneling path.

### Brief Description of the Drawings

Fig. 1 represents the schematic configuration of an apparatus for tunneling service according to the prior art.
Fig. 2A - Fig. 2G represent the structure of a multicast packet used for the tunneling service according to the prior art.
Fig. 3 represents the schematic configuration of an apparatus for explicit multicast tunneling service on a mobile IP network according to the present invention.
Fig. 4A - Fig. 4G represent the structure of multicast packet used for explicit multicast tunneling service on a mobile IP network according to the present invention.
Fig. 5 is a flowchart representing the procedure for executing the 1st embodiment of an explicit multicast tunneling service on a mobile IP network according to the present invention.
Fig. 6 is a flowchart representing the procedure for executing the 1st embodiment of an explicit multicast tunneling service on a mobile IP network according to the present invention.

### <Description of reference numbers shown in the drawings>

300: correspondent node
310-1, 310-2, 310-3 and 310-4: the 1^{st} - the 4^{th} mobile nodes
320: home agent
330: via-router
340: foreign agent

### Best Modes for carrying out the Invention

Hereinafter, preferred embodiments of a method and an apparatus for explicit multicast tunneling service on a mobile IP network according to the present invention will be described in more detail with reference to the accompanying drawings.

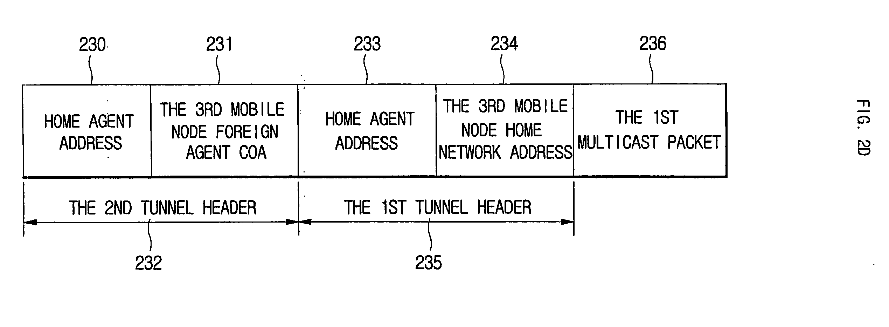

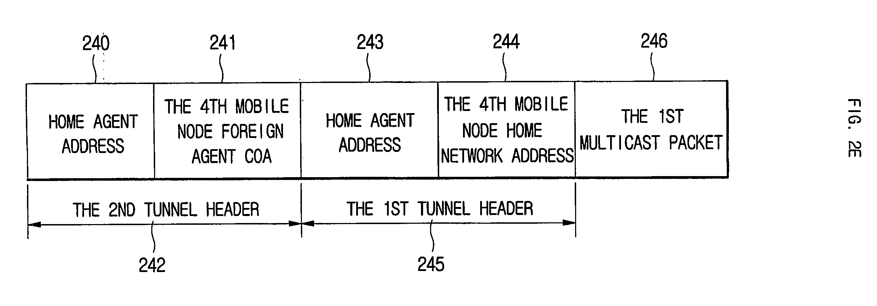

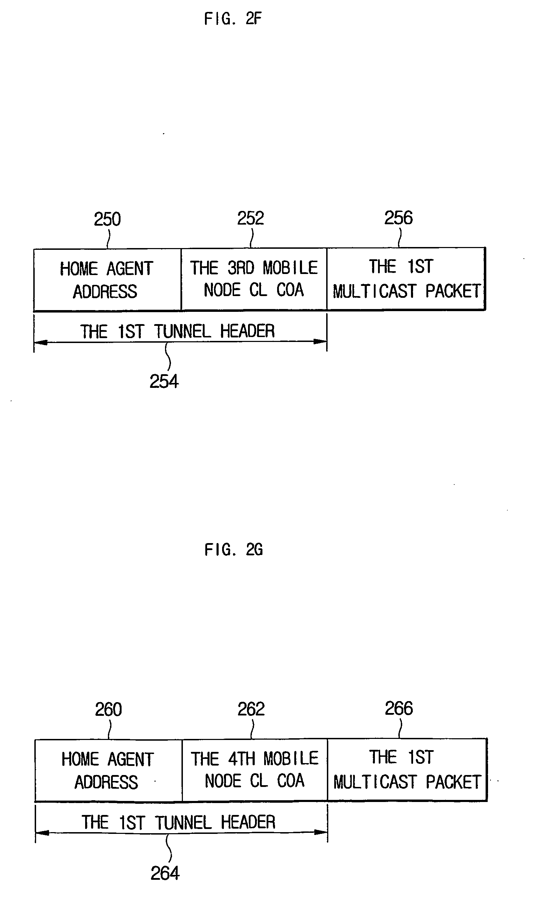

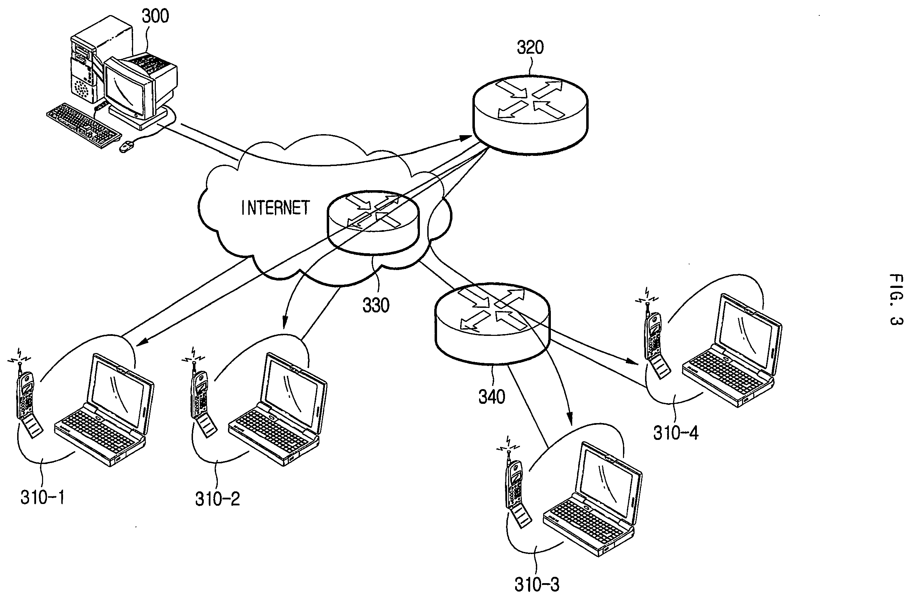

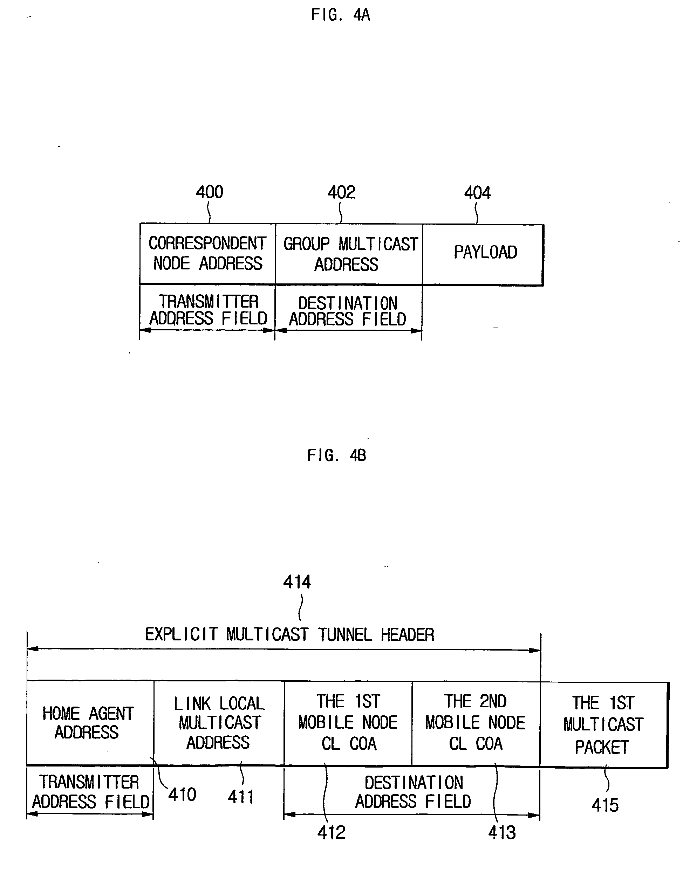

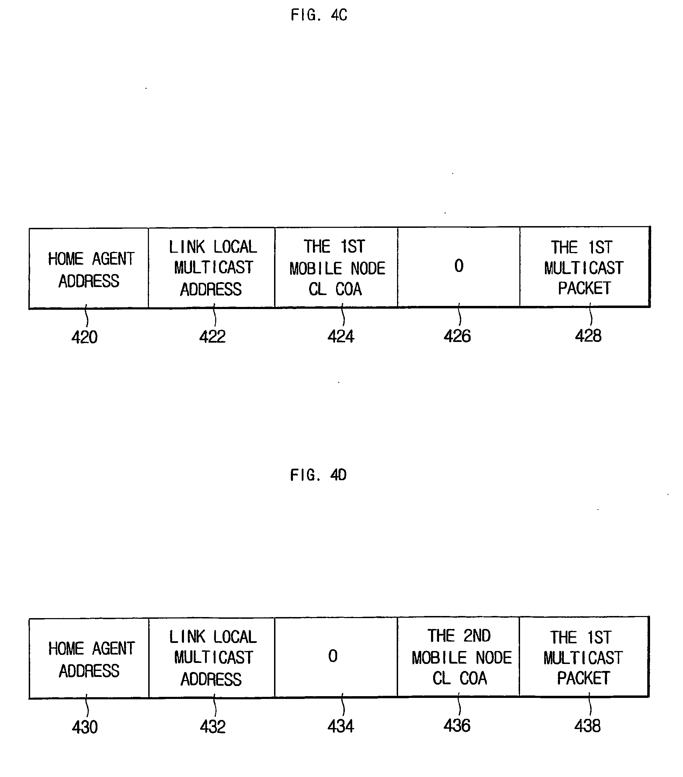

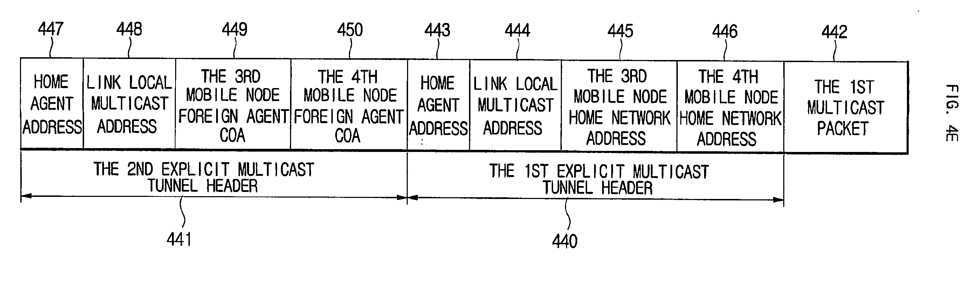

Fig. 3 represents a schematic configuration of an apparatus for explicit multicast tunneling service on a mobile IP network according to the present invention, and Fig. 4A to Fig. 4G represent the structure of a multicast packet used for explicit multicast tunneling service on a mobile IP network according to the present invention. Referring to Fig. 3, an apparatus for explicit multicast tunneling service on a mobile IP network includes the 1^{st} to the 4^{th} mobile nodes 310-1, 310-2, 310-3 and 310-4 that receive a multicast packet from the correspondent node 300 connected with home network, and the home agent 320 transmits the multicast packet transmitted from the correspondent node 300 to the 1^{st} to the 4^{th} mobile nodes 310-1, 310-2, 310-3 and 310-4 through via-router 330 and foreign agent 320.

At this time, the 1^{st} to the 4^{th} mobile nodes 310-1, 310-2, 310-3 and 310-4 are the ones that visit the foreign network after departing from the home network, while the CL COA (Co-Located Care-of Address) is allocated to the 1st and the 2nd mobile nodes 310-1, 310-2 from the DHCP server (Dynamic Host Configuration Protocol Server--not shown) on the foreign network. Also, the foreign agent care-of address is allocated at the 3rd and the 4th mobile nodes 310-3 and 310-4 by using the path information of a foreign agent 340 on the foreign network. Furthermore, the COA and the foreign agent COA are the terminal addresses of a tunnel facing the 1^{st} to the 4^{th} mobile nodes 310-1, 310-2, 310-3 and 310-4 when the 1^{st} to the 4^{th} mobile nodes 310-1, 310-2, 310-3 and 310-4 are located within the foreign network.

The 1^{st} to the 4^{th} mobile nodes 310-1, 310-2, 310-3 and 310-4 notify the COA allocated to them when they connect with the foreign network of home agent 320 to join the multicast service. Also, the 1^{st} to the 4^{th} mobile nodes 310-1, 310-2, 310-3 and 310-4 transmit a join signal for multicast service to receive a multicast packet from the correspondent node 300 to the correspondent node 300 through the home agent 320.

The home agent 320 encapsulates the multicast packet transmitted from correspondent node 300 by appending a tunnel header including the COA list of the 1^{st} to the 4^{th} mobile nodes 310-1, 310-2, 310-3 and 310-4 to execute the multicast tunneling. The via-router 330 transmits the encapsulated multicast packet transmitted from the home agent 320 by the multicast tunneling of the home agent 320 to the 1^{st} and the 2^{nd} mobile nodes 310-1, 310-2 while the foreign agent 340 transmits the encapsulated multicast packet transmitted from the home agent 320 to the 3^{rd} and the 4^{th} mobile nodes 310-3 and 310-4.

The operation of the explicit multicast tunneling service on a mobile IP network according to the present invention will be described. The correspondent node 300 generates the 1^{st} multicast packet for transmission to the 1^{st} to the 4^{th} mobile nodes 310-1, 310-2, 310-3 and 310-4 and transmits it to the home agent 320. As shown in Fig. 4A, the 1^{st} multicast packet includes a transmitter address field 400 storing the address of the correspondent node 300, a destination address field 402 storing a group multicast address, and a payload 404 storing data. Accordingly, the address of the group multicast is designated from '224.0.0.0' to '239.255.255.255' and given to the multicast group.

The home agent 320 recognizes the transmission path, that is, the via-router 330 and the foreign agent 340 of the received multicast packet by a join signal inputted from the 1^{st} to the 4^{th} mobile nodes 110-1, 110-2, 110-3, 110-4. Thereafter, the home agent 320 generates a multicast packet for transmission to a recognized transmission path, that is, the via-router 330 and the foreign agent 340. In other words, the home agent 320 generates the explicit multicast tunnel header of which the transmitter address is the home agent address and the destination address is the CL COA of the 1^{st} mobile node 310-1 and the 2^{nd} mobile node 310-2, encapsulates the 1^{st} multicast packet by a generated explicit multicast tunnel header, and generates the 2^{nd} multicast packet.

As shown in Fig. 4B, the 2^{nd} multicast packet includes a tunnel header 414 including a home agent address field 410, a link local multicast address field 411, the 1^{st} mobile node CL COA field 412 and the 2^{nd} mobile node CL COA address field 413, and the 1^{st} multicast packet field 415 storing the 1^{st} multicast packet. Furthermore, the link local multicast address stored in the link local multicast address field 411 is designated from '244.0.0.0' to '239.255.255.255' (multicast group address to distinguish multicasts) and given to the multicast group.

The home agent 320 transmits the generated 2^{nd} multicast packet to the via-router 330 by multicast tunneling while the via-router 330 recognizes the next transmission path, that is, the 1^{st} and the 2^{nd} mobile nodes 310-1, 310-2 by identifying the 1^{st} and the 2^{nd} mobile nodes CL COA stored in the destination address field of the received 2^{nd} multicast packet. Then the via-router 330 generates the 3^{rd} and the 4^{th} multicast packets for transmission to the transmission path recognized by the explicit multicast routing, that is, the 1^{st} and the 2^{nd} mobile nodes 310-1, 310-2.

As shown in Fig. 4C, the 3^{rd} multicast packet to be transmitted to the 1^{st} mobile node 310-1 by the explicit multicast routing includes the home agent address field 420 storing the home agent address, a link local multicast address field 422, the 1^{st} mobile node CL COA field 424 storing the 1^{st} mobile node CL COA of the 1^{st} mobile node 310-1, the 2^{nd} mobile node CL COA address field 426 storing '0', and the 1^{st} multicast packet field 428. The link local multicast address field 422 stores the link local multicast address, and the 1^{st} multicast packet field 428 stores the 1^{st} multicast packet.

Also, as shown in Fig. 4D, the 4^{th} multicast packet to be transmitted to the 2^{nd} mobile node 310-2 by the explicit multicast routing includes a home agent address field 430 storing the home agent address, a link local multicast address field 432, the 1^{st} mobile node CL COA field 434 storing '0', the 2^{nd} mobile node CL COA field 436 storing the CL COA of the 2^{nd} mobile node 310-2, and the 1^{st} multicast packet field 438. The link local multicast address field 432 stores the link local multicast address, and the 1^{st} multicast packet field 438 stores the 1^{st} multicast packet.

The via-router 330 generates the 3^{rd} and the 4^{th} multicast packets to the 1^{st} and the 2^{nd} mobile nodes 310-1, 310-2 by explicit multicast routing. The 1^{st} and the 2^{nd} mobile nodes 310-1, 310-2 identify the 1^{st} multicast packet transmitted from the correspondent node 300 by removing each explicit multicast tunnel header from the 3^{rd} and the 4^{th} multicast packets transmitted from the via-router 330.

The home agent 320 generates the 1^{st} explicit multicast tunnel header of which transmitter address is the home agent address and the destination address is the home network address of the 3^{rd} mobile node 310-3 and the 4^{th} mobile node 310-4, and encapsulates the 1^{st} multicast packet by the generated explicit multicast tunnel header. Then the home agent 320 generates the explicit multicast tunnel header of which the transmitter address is the home agent address and the destination address is the COA of the 3^{rd} mobile node 310-3 and the 4^{th} mobile node 310-4, encapsulates the 1^{st} multicast packet by generating the 2^{nd} explicit multicast tunnel header, and generates the 5^{th} multicast packet.

As shown in Fig.4E, the 4^{th} multicast packet includes the 1^{st} explicit multicast tunnel header 440, the 2^{nd} explicit multicast tunnel header 441, and the 1^{st} multicast packet field 442. Furthermore, the 1^{st} explicit multicast tunnel header 440 includes a home agent address field 443, a link local multicast address field 444, the 3^{rd} mobile node home network address field 445, and the 4^{th} mobile node home network address field 446. Also, the 2^{nd} explicit multicast tunnel header 441 includes a home agent address field 447, a link local multicast address field 448, the 3^{rd} mobile node foreign agent COA field 449, and the 4^{th} mobile node foreign agent COA field 450.

The home agent 320 encapsulates the 1^{st} multicast packet by the 1^{st} and the 2^{nd} explicit multicast tunnel headers 440, 441 when the home agent 320 transmits the multicast packet to the 3^{rd} and the 4^{th} mobile nodes 310-3 and 310-4 through the foreign agent 340 because the foreign agent 340 doesn't have the information about the COA that the 3^{rd} and the 4^{th} mobile nodes 310-3 and 310-4 are allocated. The home agent 320 transmits the 4^{th} multicast packet generated by the multicast tunneling to the foreign agent 340, and the foreign agent 340 removes the 2^{nd} explicit multicast tunnel header 441 from the received 5^{th} multicast packet. Then the foreign agent 340 duplicates the 5^{th} multicast packet that is removed from the 2^{nd} explicit multicast tunnel header 441 and generates the 6^{th} and the 7^{th} multicast packets to be transmitted to the 3^{rd} mobile node 310-3 and the 4^{th} mobile node 310-4.

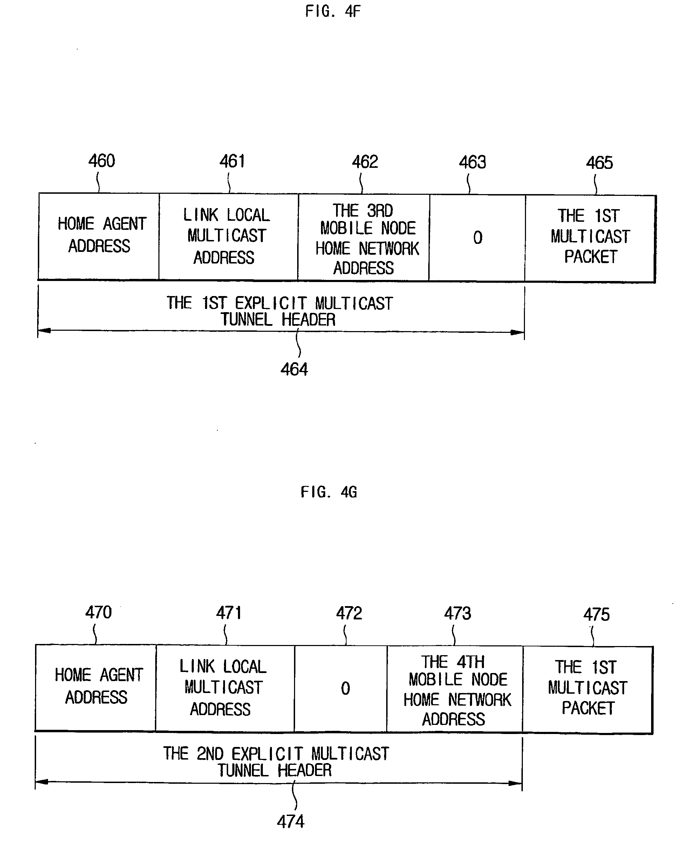

Additionally, as shown in Fig. 4F, the 6^{th} multicast packet to be transmitted to the 3^{rd} mobile node 310-3 includes the 1^{st} explicit multicast tunnel header 464 including a home agent address field 460 storing the home agent address, a link local multicast address field 461, the 3^{rd} mobile node home network address field 462 storing the 3^{rd} mobile node home network address and the 4^{th} mobile node home network address field 463 storing '0', and the 1^{st} multicast packet field 465. The link local multicast address field 461 stores the link local multicast address, and the 1^{st} multicast packet field 465 stores the 1^{st} multicast packet.

Also, as shown in Fig. 4G, the 7^{th} multicast packet to be transmitted to the 4^{th} mobile node 310-4 includes the 2nd explicit multicast tunnel header 474 including a home agent address field 470 storing the home agent address, a link local multicast address field 471, the 3^{rd} mobile node home network address field 472 storing '0', the 4^{th} mobile node home network address field 473 storing the 4^{th} mobile node home network address, and the 1^{st} multicast packet field 475. The link local multicast address field 471 stores link local multicast address, and the 1^{st} multicast packet field 475 stores the 1^{st} multicast packet.

The 3^{rd} and the 4^{th} mobile nodes 310-3 and 310-4 identify the 1^{st} multicast packet transmitted from the correspondent node 300 by removing each explicit multicast tunnel header 464, 474 from the 6^{th} and the 7^{th} multicast packets transmitted from foreign agent 340.

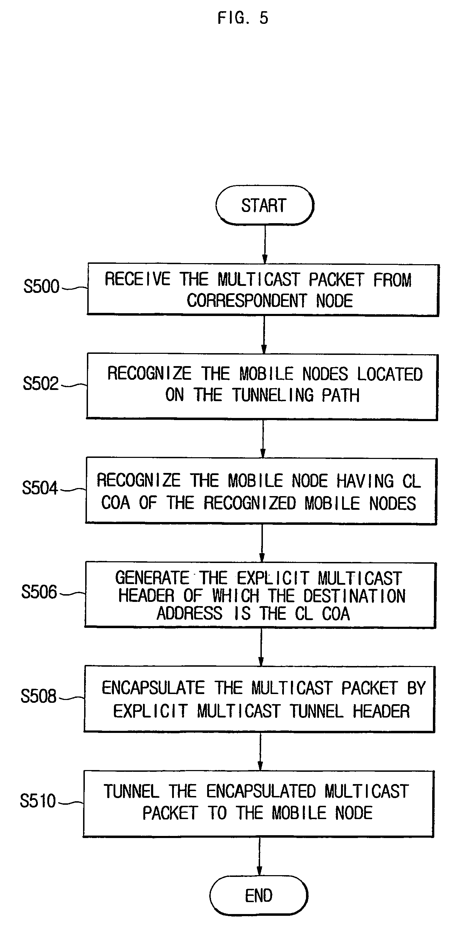

A method for explicit multicast tunneling service on a mobile network according to the present invention will be described with reference to the accompanying drawings. Fig. 5 is a flowchart representing the procedure for executing the 1st embodiment of explicit multicast tunneling service on a mobile IP network according to the present invention.

The home agent 320 receives the multicast packet to be transmitted to the 1^{st} - the 4^{th} mobile nodes 310-1, 310-2, 310-3 and 310-4 from the correspondent node 300 connected with home network (S500). As such, the received multicast packet includes the multicast address of a group for which the 1^{st} - the 4^{th} mobile nodes 310-1, 310-2, 310-3 and 310-4 that request multicast service belong. Then the home agent 320 recognizes the transmission path of the received multicast packet, the 1^{st} - the 4^{th} mobile nodes 310-1, 310-2, 310-3 and 310-4 (tunneling path) (S502).

The home agent 320 receives a join signal to receive multicast packets of the 1^{st} - the 4^{th} mobile nodes 310-1, 310-2, 310-3 and 310-4 in advance and recognizes the transmission path for tunneling by the received join signal. The home agent 320 of the 1^{st} and the 2^{nd} mobile nodes 310-1, 310-2 includes the CL COA of the 1^{st} - the 4^{th} mobile nodes 310-1, 310-2, 310-3 and 310-4(S504). Then home agent 320 generates an explicit multicast tunnel header whose destination address is the CL COA of the recognized 1^{st} and the 2^{nd} mobile nodes 310-1, 310-2 (S506), and encapsulates the multicast packet by the generated explicit multicast tunnel header (S508). Further, the encapsulated multicast packet includes the explicit multicast tunnel header including a transmitter address field storing the home agent address, a link local multicast address field and destination address field storing the 1^{st} and the 2^{nd} mobile nodes CL COA, and multicast packet field.

The home agent 320 executes the explicit multicast tunneling by transmitting the encapsulated multicast packet to the 1^{st} and the 2^{nd} mobile nodes 310-1, 310-2 (S510). In the step S510, multicast routing by plural via-routers can transmit the encapsulated multicast packet to the 1^{st} and the 2^{nd} mobile nodes 310-1, 310-2.

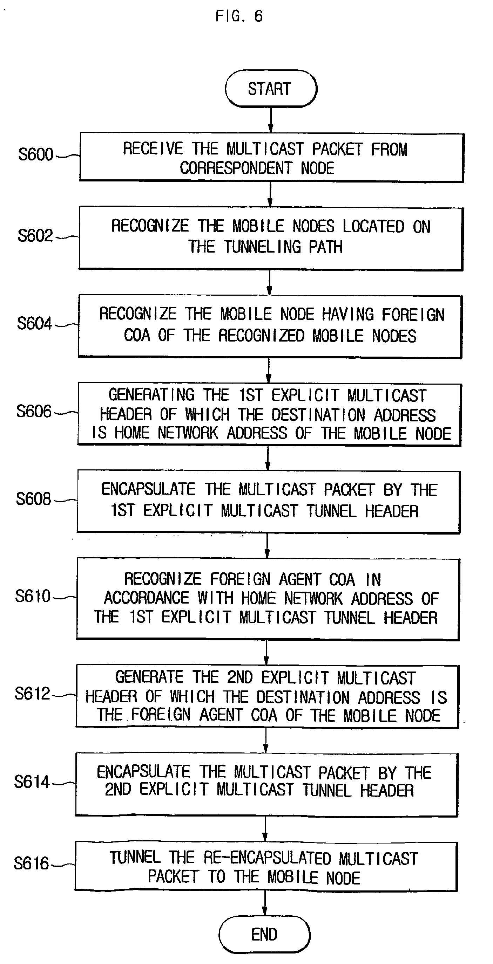

Fig. 6 is a flowchart representing the procedure for executing the 1st embodiment of explicit multicast tunneling service on a mobile IP network according to the present invention. The home agent 320 receives the multicast packet to be transmitted from the correspondent node 300 connected with the home network to the 1^{st} - the 4^{th} mobile nodes 310-1, 310-2, 310-3 and 310-4 (S600). Then the home agent 320 recognizes the transmission path of the received multicast packet, that is, the 1^{st} - the 4^{th} mobile nodes 310-1, 310-2, 310-3 and 310-4 (tunneling path) (S602).

The home agent 320 recognizes the mobile node having the foreign agent COA of recognized tunneling path, the 1^{st} - the 4^{th} mobile nodes 310-1, 310-2, 310-3 and 310-4 (S604). That is, the home agent 320 recognizes the 3^{rd} and the 4^{th} mobile nodes 310-3 and 310-4 that are connected with the foreign agent 340 and allocated foreign agent COA of the 1^{st} - the 4^{th} mobile nodes 310-1, 310-2, 310-3 and 310-4.

The home agent 320 generates the 1^{st} explicit multicast tunnel header whose destination address is the home network address of the 3^{rd} and the 4^{th} mobile nodes 310-3 and 310-4 recognized in the step S604 to transmit the multicast packet of the 3^{rd} and the 4^{th} mobile node 310-3 and 310-4 (S606). Then the home agent 320 encapsulates the multicast packet transmitted from the correspondent node 300 by the generated 1^{st} explicit multicast tunnel header (S608).

The home agent 320 recognizes the foreign agent COA of the 3^{rd} and the 4^{th} mobile nodes 310-3 and 310-4 according to the home network address stored in the 1^{st} explicit multicast tunnel header (S610). Then the home agent 320 generates the 2^{nd} explicit multicast tunnel header of which the destination address is the foreign agent COA of the recognized 3^{rd} and the 4^{th} mobile nodes 310-3 and 310-4 (S612).

The home agent 320 encapsulates the multicast packet encapsulated by the 2^{nd} explicit multicast tunnel header in the step S612 again (S614). Then the home agent 320 transmits the re-encapsulated multicast packet to the foreign agent 340 and connects with the 3^{rd} and the 4^{th} mobile nodes 310-3 and 310-4 by explicit multicast tunneling (S616). Further, the foreign agent 340 removes the 2^{nd} explicit multicast tunnel header from the re-encapsulated multicast packet transmitted from the home agent 320 and transmits it to the 3^{rd} and the 4^{th} mobile nodes 310-3 and 310-4.

Also, the 3^{rd} and the 4^{th} mobile nodes 310-3 and 310-4 remove the 1^{st} explicit multicast tunnel header from the multicast packet transmitted from the foreign agent 340 to recognize the multicast packet transmitted from the correspondent node 300.

### Industrial Applicability

An apparatus and method for explicit multicast tunneling service according to the present invention performs tunneling by generating an explicit multicast tunnel header, of which the destination address is the CL COA, and encapsulating the original packet using the generated explicit multicast tunnel header if the CL COA is allocated to the mobile node.

Also, an apparatus and method for explicit multicast tunneling service according to the present invention generates the 1^{st} explicit multicast, of which the destination address is the home network address of mobile node, is allocated a foreign agent COA, and encapsulates original packet by the 1^{st} explicit multicast. Then the apparatus generates the 2^{nd} explicit multicast tunnel header, of which the foreign agent COA of the mobile node is allocated, and executes the tunneling by encapsulating the encapsulated multicast packet by the 2^{nd} explicit multicast tunnel header.

Therefore, according to the present invention, transmission efficiency can be improved since the execution of the multicast can reduce the bandwidth and the transmission time for the transmission of the packet when the multicast packet is tunneled to plural mobile nodes.

Although the invention has been described in its preferred form with a certain degree of particularity, it is understood by those individuals with knowledge of the related art that the present disclosure of the preferred form can be changed in various details of construction so that the combination and arrangement of parts may be implemented without departing from the scope of the invention as hereinafter claimed.

## Claims

1. A method for a multicast tunneling service to transmit a multicast packet transmitted from a correspondent node (300) to plural mobile nodes (310) on a mobile IP network, wherein the mobile nodes (310-1, 310-2) use co-located care of address and comprising the steps of:
receiving a join signal from the plural mobile nodes (310);
recognizing a via-router (330) on the transmission path of the join signal;
receiving (S500) the multicast packet from the correspondent node (300);
recognizing (S502) the plural mobile nodes (310-1, 310-2) located on a tunneling path of the received multicast packet; said method being **characterised by** further comprising the steps of:
generating (S506) the explicit multicast tunnel header including the co-located care of addresses of the plural mobile nodes (310-1, 310-2) located on the tunneling path;
encapsulating (S508) the received multicast packet by the generated explicit multicast tunnel header; and
transmitting (S510) the encapsulated multicast packet to the plural mobile nodes (310-1, 310-2) through the via-router (330).

2. The method according to claim 1, wherein said explicit tunnel header includes a home agent address field (410), a link local multicast address field (411), and a mobile node care of address field storing the co-located care of addresses of the plural mobile nodes (310-1, 310-2) on the tunneling path (412, 413).

3. A method for a multicast tunneling service to transmit a multicast packet transmitted from a correspondent node (300) to plural mobile nodes (310) on a mobile IP network, wherein the mobile nodes (310-3, 310-4) use a foreign agent (340) care of address and comprising the steps of:
receiving a join signal from a plurality of mobile nodes (310-3, 310-4);
recognizing the foreign agent (340) on the transmission path of the join signal;
receiving (S600) the multicast packet from the correspondent node (300);
recognizing (S602) the mobile nodes (310-3, 310-4) located on the tunneling path of the received multicast packet; said method being **characterised by** further comprising the steps of:
generating (S606) a 1st explicit multicast tunnel header including home network addresses of the plural mobile nodes (310-3, 310-4) located on the tunneling path;
generating (S612) a 2nd explicit multicast tunnel header including the foreign agent (340) care of addresses of the plural mobile nodes (310-3, 310-4);
encapsulating (S608, S614) the received multicast packet by the 1st and 2nd explicit multicast tunnel header; and
transmitting (S616) the re-encapsulated multicast packet to the plural mobile nodes (310-3, 310-4) through the foreign agent (340).

4. The method according to claim 3, wherein said 1st explicit tunnel header includes a home agent address field (443), a link local multicast address field (444), and a home network address list field of the plural mobile nodes on the tunneling path (445, 446).

5. The method according to claim 3, wherein said 2nd explicit tunnel header includes a home agent address field (447), a link local multicast address field (448), and a foreign agent care of address list field storing the plural mobile nodes on the tunneling path (449, 450).

6. An apparatus for a multicast tunneling service to transmit a multicast packet transmitted from a correspondent node (300) to plural mobile nodes (310) on a mobile IP network, wherein the mobile nodes (310-1, 310-2) use co-located care of address and comprising:
means for receiving a join signal from a plurality of mobile nodes (310);
means for recognizing a via-router (330) on a transmission path of the join signal;
means for receiving the multicast packet from the correspondent node (300);
means for recognizing the plural mobile nodes (310) located on the tunneling path of the received multicast packet; and being **characterised by** further comprising:
means for generating the explicit multicast tunnel header including the co-located care of addresses of the plural mobile nodes (310-1, 310-2);
means for encapsulating the received multicast packet by the generated explicit multicast tunnel header; and
means for transmitting the encapsulated multicast packet to the plural mobile nodes (310-1, 310-2) through the via-router (330).

7. An apparatus for a multicast tunneling service to transmit a multicast packet transmitted from a correspondent node (300) to plural mobile nodes (310) on a mobile IP network, wherein the mobile nodes (310-3, 310-4) use a foreign agent COA and comprising:
means for receiving a join signal from the plural mobile nodes (310);
means for recognizing a foreign agent (340) on a transmission path of the join signal;
means for receiving the multicast packet from the correspondent node (300);
means for recognizing the plural mobile nodes (310) located on the tunneling path of the received multicast packet; and being **characterised by** further comprising:
means for generating a 1 st explicit multicast tunnel header including home network addresses of the plural mobile nodes (310-3, 310-4) located on the tunneling path;
means for generating a 2nd explicit multicast tunnel header including the foreign agent (340) care of addresses of the plural mobile nodes (310-3, 310-4) located on the tunneling path;
means for encapsulating the received multicast packet by the 1st and 2nd explicit multicast tunnel header; and
means for transmitting the re-encapsulated multicast packet to the plural mobile nodes (310-3, 310-4) through the foreign agent (340).

8. An apparatus for a multicast tunneling service to transmit a multicast packet transmitted from a correspondent node (300) to plural mobile nodes (310) on a mobile IP network, wherein the mobile nodes (310-1, 310-2) use co-located care of address and comprising:
a memory storing a program;
and a processor connected to said memory, wherein said processor is operative with said program to execute a method for a multicast tunneling service as claimed in claim 1 or 2.

9. An apparatus for a multicast tunneling service to transmit a multicast packet transmitted from a correspondent node (300) to plural mobile nodes (310) on a mobile IP network, wherein the mobile nodes (310-3, 310-4) use a foreign agent care of address and comprising:
a memory storing a program;
and a processor connected to said memory, wherein said processor is operative with said program to execute a method for a multicast tunneling service as claimed in any one of claims 3 to 5.

## Patentansprüche

1. Multicast-Tunneldienstverfahren zum Übersenden eines Multicast-Pakets, das von einem Korrespondenzknoten (300) an eine Vielzahl mobiler Knoten (310) in einem mobilen IP-Netzwerk ausgesendet wurde, wobei die mobilen Knoten (310-1, 310-2) eine co-located Care-of-Adresse verwenden und das Verfahren die folgenden Schritte aufweist:
Empfangen eines Teilnahmesignals von der Vielzahl mobiler Knoten (310);
Erkennen eines Via-Routers (330) auf dem Übertragungspfad des Teilnahmesignals;
Empfangen (S500) des Multicast-Pakets vom Korrespondenzknoten (300);
Erkennen (S502) der Vielzahl mobiler Knoten (310-1, 310-2), die sich auf einem Tunnelpfad des empfangenen Multicast-Pakets befinden; wobei das Verfahren **dadurch gekennzeichnet ist, dass** es weiterhin die folgenden Schritte aufweist:
Erzeugen (S506) des expliziten Multicast-Tunnelkopfes, der die co-located Care-of-Adresse der Vielzahl mobiler Konten (310-1, 310-2) enthält, die sich auf dem Tunnelpfad befinden;
Einkapseln (S508) des empfangenen Multicast-Pakets durch den erzeugten expliziten Multicast-Tunnelkopf; und
Übertragen (S510) des eingekapselten Multicast-Pakets an die Vielzahl mobiler Knoten (310-1, 310-2) über den Via-Router (330).

2. Verfahren nach Anspruch 1, bei dem der explizite Tunnelkopf ein Heimatagenten-Adressfeld (410), ein Link-Local-Multicast-Adressfeld (411) und ein Mobilknoten-Care-of-Adressfeld enthält, das die co-located Care-of-Adressen der Vielzahl mobiler Knoten (310-1, 310-2) auf dem Tunnelpfad (412, 413) speichert.

3. Multicast-Tunneldienstverfahren zum Übersenden eines Multicast-Pakets, das von einem Korrespondenzknoten (300) an eine Vielzahl mobiler Knoten (310) in einem mobilen IP-Netzwerk ausgesendet wurde, wobei die mobilen Knoten (310-3, 310-4) eine Fremdagenten (340)-Care-of-Adresse verwenden und das Verfahren die folgenden Schritte aufweist:
Empfangen eines Teilnahmesignals von einer Vielzahl mobiler Knoten (310-3, 310-4);
Erkennen des Fremdagenten (340) auf dem Übertragungspfad des Teilnahmesignals;
Empfangen (S600) des Multicast-Pakets vom Korrespondenzknoten (300);
Erkennen (S602) der mobilen Knoten (310-3, 310-4), die sich auf dem Tunnelpfad des empfangenen Multicast-Pakets befinden; wobei das Verfahren
**dadurch gekennzeichnet ist, dass** es weiterhin die folgenden Schritte aufweist:
Erzeugen (S606) eines ersten expliziten Multicast-Tunnelkopfes, der eine Heimatnetzwerk-Adresse der Vielzahl mobiler Knoten (310-3, 310-4) enthält, die sich auf dem Tunnelpfad befinden;
Erzeugen (S612) eines zweiten expliziten Multicast-Tunnelkopfes, der die Fremdagenten (340)-Care-of-Adresse der Vielzahl mobiler Knoten (310-3, 310-4) enthält;
Einkapseln (S608, S614) des empfangenen Multicast-Pakets durch den ersten und zweiten expliziten Multicast-Tunnelkopf; und
Senden (S616) des wieder eingekapselten Multicast-Pakets an die Vielzahl mobiler Knoten (310-3, 310-4) über den Fremdagenten (340).

4. Verfahren nach Anspruch 3, bei dem der erste explizite Tunnelkopf ein Heimatagenten-Adressfeld (443), ein Link-Local-Multicast-Adressfeld (444) und ein Heimatnetzwerk-Adresslistenfeld der Vielzahl mobiler Knoten auf dem Tunnelpfad (445, 446) enthält.

5. Verfahren nach Anspruch 3, bei dem der zweite explizite Tunnelkopf ein Heimatagenten-Adressfeld (447), ein Link-Local-Multicast-Adressfeld (448) und ein Fremdagenten-Care-of-Adresslistenfeld enthält, das die Vielzahl mobiler Knoten auf dem Tunnelpfad (449, 450) speichert.

6. Vorrichtung für einen Multicast-Tunnelservice zum Übersenden eines Multicast-Pakets, das von einem Korrespondenzknoten (300) an eine Vielzahl mobiler Knoten (310) in einem mobilen IP-Netzwerk ausgesendet wurde, wobei die mobilen Knoten (310-1, 310-2) eine co-located Care-of-Adresse verwenden, umfassend:
Mittel zum Empfangen eines Teilnahmesignals von einer Vielzahl mobiler Knoten (310);
Mittel zum Erkennen eines Via-Routers (330) auf dem Übertragungspfad des Teilnahmesignals;
Mittel zum Empfangen des Multicast-Pakets vom Korrespondenzknoten (300)
Mittel zum Erkennen der Vielzahl mobiler Knoten (310), die sich auf dem Tunnelpfad des empfangenen Multicast-Pakets befinden; **dadurch gekennzeichnet, dass** die Vorrichtung weiterhin umfasst:
Mittel zum Erzeugen des expliziten Multicast-Tunnelkopfes, der die co-located Care-of-Adressen der Vielzahl mobiler Knoten (310-1, 310-2) enthält;
Mittel zum Einkapseln des empfangenen Multicast-Pakets durch den erzeugten expliziten Multicast-Tunnelkopf; und
Mittel zum Übertragen des eingekapselten Multicast-Pakets an die Vielzahl mobiler Knoten (310-1, 310-2) über den Via-Router (330).

7. Vorrichtung für ein Multicast-Tunneldienstverfahren zum Übersenden eines Multicast-Pakets, das von einem Korrespondenzknoten (300) an eine Vielzahl mobiler Knoten (310) in einem mobilen IP-Netzwerk ausgesendet wurde, wobei die mobilen Knoten (310-3, 310-4) eine Fremdagenten (340)-Care-of-Adresse verwenden, umfassend:
Mittel zum Empfangen eines Teilnahmesignals von der Vielzahl mobiler Knoten (310);
Mittel zum Erkennen eines Fremdagenten (340) auf einem Übertragungspfad des Teilnahmesignals;
Mittel zum Empfangen des Multicast-Pakets vom Korrespondenzknoten (300);
Mittel zum Erkennen der Vielzahl mobiler Knoten (310), die sich auf dem Tunnelpfad des empfangenen Multicast-Pakets befinden; **dadurch gekennzeichnet, dass** die Vorrichtung weiterhin umfasst:
Mittel zum Erzeugen eines ersten expliziten Multicast-Tunnelkopfes, der Heimatnetzwerk-Adressen der Vielzahl mobiler Knoten (310-3, 310-4) enthält, die sich auf dem Tunnelpfad befinden;
Mittel zum Erzeugen eines zweiten expliziten Multicast-Tunnelkopfes, der die Fremdagenten (340)-Care-of-Adressen der Vielzahl mobiler Knoten (310-3, 310-4), die sich auf dem Tunnelpfad befinden, enthält;
Mittel zum Einkapseln des empfangenen Multicast-Pakets durch den ersten und zweiten expliziten Multicast-Tunnelkopf; und
Mittel zum Senden des wieder eingekapselten Multicast-Pakets an die Vielzahl mobiler Knoten (310-3, 310-4) über den Fremdagenten (340).

8. Vorrichtung für einen Multicast-Tunneldienst zum Übertragen eines Multicast-Pakets, das von einem Korrespondenzknoten (300) an eine Vielzahl mobiler Knoten (310) in einem mobilen IP-Netzwerk übertragen wurde, wobei die mobilen Knoten (310-1, 310-2) eine co-located Care-of-Adresse verwenden, umfassend:
einen Speicher, der ein Programm speichert;
und einen Prozessor, der mit dem Speicher verbunden ist, wobei der Prozessor das Programm ausführt, um ein Verfahren für einen Multicast-Tunneldienst nach Anspruch 1 oder 2 auszuführen.

9. Vorrichtung für einen Multicast-Tunneldienst zum Übertragen eines Multicast-Pakets, das von einem Korrespondenzknoten (300) an eine Vielzahl mobiler Knoten (310) in einem mobilen IP-Netzwerk übertragen wurde, wobei die mobilen Knoten (310-3, 310-4) eine Fremdagenten-Care-of-Adresse verwenden, umfassend:
einen Speicher, der ein Programm speichert;
und einen Prozessor, der mit dem Speicher verbunden ist, wobei der Prozessor das Programm ausführt, um ein Verfahren für einen Multicast-Tunneldienst nach einem der Ansprüche 3 bis 5 auszuführen.

## Revendications

1. Procédé pour un service de tunnellisation de multidiffusion pour transmettre un paquet de multidiffusion transmis depuis un noeud correspondant (300) vers une pluralité de noeuds mobiles (310) sur un réseau IP mobile, dans lequel les noeuds mobiles (310-1, 310-2) utilisent une adresse temporaire primaire colocalisée et comprenant les étapes consistant à :
recevoir un signal joint depuis la pluralité de noeuds mobiles (310) ;
reconnaître un routeur de transit (330) sur le chemin de transmission du signal joint ;
recevoir (S500) le paquet de multidiffusion depuis le noeud correspondant (300) ;
reconnaître (S502) la pluralité de noeuds mobiles (310-1, 310-2) situés sur un chemin de tunnellisation du paquet de multidiffusion reçu ; ledit procédé étant **caractérisé en ce qu'**il comprend en outre les étapes consistant à :
générer (S506) l'en-tête de tunnel de multidiffusion explicite comprenant les adresses temporaires primaires colocalisées de la pluralité de noeuds mobiles (310-1, 310-2) situés sur le chemin de tunnellisation ;
encapsuler (S508) le paquet de multidiffusion reçu par l'en-tête de tunnel de multidiffusion explicite généré ; et
transmettre (S510) le paquet de multidiffusion encapsulé à la pluralité de noeuds mobiles (310-1, 310-2) par l'intermédiaire du routeur de transit (330).

2. Procédé selon la revendication 1, dans lequel ledit en-tête de tunnel explicite comprend un champ d'adresse d'agent mère (410), un champ d'adresse de multidiffusion locale de liaison (411) et un champ d'adresse temporaire primaire de noeud mobile stockant les adresses temporaires primaires colocalisées de la pluralité de noeuds mobiles (310-1, 310-2) sur le chemin de tunnellisation (412, 413).

3. Procédé pour un service de tunnellisation de multidiffusion pour transmettre un paquet de multidiffusion transmis depuis un noeud correspondant (300) vers une pluralité de noeuds mobiles (310) sur un réseau IP mobile, dans lequel les noeuds mobiles (310-3, 310-4) utilisent une adresse temporaire primaire d'agent relais (340) et comprenant les étapes consistant à :
recevoir un signal joint depuis une pluralité de noeuds mobiles (310-3, 310-4) ;
reconnaître l'agent relais (340) sur le chemin de transmission du signal joint ;
recevoir (S600) le paquet de multidiffusion depuis le noeud correspondant (300) ;
reconnaître (S602) les noeuds mobiles (310-3, 310-4) situés sur le chemin de tunnellisation du paquet de multidiffusion reçu ; ledit procédé étant **caractérisé en ce qu'**il comprend en outre les étapes consistant à :
générer (S606) un premier en-tête de tunnel de multidiffusion explicite comprenant les adresses de réseau mère de la pluralité de noeuds mobiles (310-3, 310-4) situés sur le chemin de tunnellisation ;
générer (S612) un second en-tête de tunnel de multidiffusion explicite comprenant les adresses temporaires primaires d'agent relais (340) de la pluralité de noeuds mobiles (310-3, 310-4) ;
encapsuler (S608, S614) le paquet de multidiffusion reçu par le premier et le second en-têtes de tunnel de multidiffusion explicites ; et
transmettre (S616) le paquet de multidiffusion à nouveau encapsulé à la pluralité de noeuds mobiles (310-3, 310-4) par l'intermédiaire de l'agent relais (340).

4. Procédé selon la revendication 3, dans lequel ledit premier en-tête de tunnel explicite comprend un champ d'adresse d'agent mère (443), un champ d'adresse de multidiffusion locale de liaison (444) et un champ de liste d'adresses de réseau mère de la pluralité de noeuds mobiles sur le chemin de tunnellisation (445, 446).

5. Procédé selon la revendication 3, dans lequel ledit second en-tête de tunnel explicite comprend un champ d'adresse d'agent mère (447), un champ d'adresse de multidiffusion locale de liaison (448) et un champ de liste d'adresses temporaires primaires d'agent relais stockant la pluralité de noeuds mobiles sur le chemin de tunnellisation (449, 450).

6. Appareil pour un service de tunnellisation de multidiffusion pour transmettre un paquet de multidiffusion transmis depuis un noeud correspondant (300) vers une pluralité de noeuds mobiles (310) sur un réseau IP mobile, dans lequel les noeuds mobiles (310-1, 310-2) utilisent une adresse temporaire primaire colocalisée et comprenant :
un moyen pour recevoir un signal joint depuis une pluralité de noeuds mobiles (310) ;
un moyen pour reconnaître un routeur de transit (330) sur un chemin de transmission du signal joint ;
un moyen pour recevoir le paquet de multidiffusion depuis le noeud correspondant (300) ;
un moyen pour reconnaître la pluralité de noeuds mobiles (310) situés sur le chemin de tunnellisation du paquet de multidiffusion reçu ; et étant **caractérisé en ce qu'**il comprend en outre :
un moyen pour générer l'en-tête de tunnel de multidiffusion explicite comprenant les adresses temporaires primaires colocalisées de la pluralité de noeuds mobiles (310-1, 310-2) ;
un moyen pour encapsuler le paquet de multidiffusion reçu par l'en-tête de tunnel de multidiffusion explicite généré ; et
un moyen pour transmettre le paquet de multidiffusion encapsulé à la pluralité de noeuds mobiles (310-1, 310-2) par l'intermédiaire du routeur de transit (330).

7. Appareil pour un service de tunnellisation de multidiffusion pour transmettre un paquet de multidiffusion transmis depuis un noeud correspondant (300) vers une pluralité de noeuds mobiles (310) sur un réseau IP mobile, dans lequel les noeuds mobiles (310-3, 310-4) utilisent une adresse temporaire primaire d'agent relais et comprenant :
un moyen pour recevoir un signal joint depuis la pluralité de noeuds mobiles (310) ;
un moyen pour reconnaître un agent relais (340) sur un chemin de transmission du signal joint ;
un moyen pour recevoir le paquet de multidiffusion depuis le noeud correspondant (300) ;
un moyen pour reconnaître la pluralité de noeuds mobiles (310) situés sur le chemin de tunnellisation du paquet de multidiffusion reçu ; et étant **caractérisé en ce qu'**il comprend en outre :
un moyen pour générer un premier en-tête de tunnel de multidiffusion explicite comprenant les adresses de réseau mère de la pluralité de noeuds mobiles (310-3, 310-4) situés sur le chemin de tunnellisation ;
un moyen pour générer un second en-tête de tunnel de multidiffusion explicite comprenant les adresses temporaires primaires d'agent relais (340) de la pluralité de noeuds mobiles (310-3, 310-4) situés sur le chemin de tunnellisation ;
un moyen pour encapsuler le paquet de multidiffusion reçu par le premier et le second en-têtes de tunnel de multidiffusion explicites ; et
un moyen pour transmettre le paquet de multidiffusion à nouveau encapsulé à la pluralité de noeuds mobiles (310-3, 310-4) par l'intermédiaire de l'agent relais (340).

8. Appareil pour un service de tunnellisation de multidiffusion pour transmettre un paquet de multidiffusion transmis depuis un noeud correspondant (300) vers une pluralité de noeuds mobiles (310) sur un réseau IP mobile, dans lequel les noeuds mobiles (310-1, 310-2) utilisent une adresse temporaire primaire colocalisée et comprenant :
une mémoire stockant un programme ;
et un processeur connecté à ladite mémoire, dans lequel ledit processeur fonctionne avec ledit programme pour exécuter un procédé pour un service de tunnellisation de multidiffusion tel que revendiqué dans la revendication 1 ou la revendication 2.

9. Appareil pour un service de tunnellisation de multidiffusion pour transmettre un paquet de multidiffusion transmis depuis un noeud correspondant (300) vers une pluralité de noeuds mobiles (310) sur un réseau IP mobile, dans lequel les noeuds mobiles (310-3, 310-4) utilisent une adresse temporaire primaire d'agent relais et comprenant :
une mémoire stockant un programme ;
et un processeur connecté à ladite mémoire, dans lequel ledit processeur fonctionne avec ledit programme pour exécuter un procédé pour un service de tunnellisation de multidiffusion tel que revendiqué dans l'une quelconque des revendications 3 à 5.
